# EUROPEAN PATENT SPECIFICATION

(11) **EP 3 123 133 B1**
(45) Date of publication and mention of the grant of the patent: **17.07.2019**
(21) Application number: 15768281.6
(22) Date of filing: 26.03.2015
(51) Int. Cl.: G01P 3/487, G01D 5/244, G01L 3/10

(54) **SYSTEMS AND METHODS FOR REDUCING ROTATION NOISE IN A MAGNETOELASTIC DEVICE AND MEASURING TORQUE, SPEED, AND ORIENTATION**
SYSTEME UND VERFAHREN ZUR VERRINGERUNG DES ROTATIONSRAUSCHEN IN EINER MAGNETOELASTISCHEN VORRICHTUNG UND ZUR MESSUNG VON DREHMOMENT, GESCHWINDIGKEIT UND AUSRICHTUNG
SYSTÈMES ET PROCÉDÉS PERMETTANT DE RÉDUIRE LE BRUIT DE ROTATION DANS UN DISPOSITIF MAGNÉTO-ÉLASTIQUE ET DE MESURER LE COUPLE, LA VITESSE, ET L'ORIENTATION

(30) Priority: 26.03.2014 US 201461970546 P; 26.03.2014 US 201461970642 P
(43) Date of publication of application: 01.02.2017
(73) Proprietor: Methode Electronics, Inc., Carthage, IL 62321 (US)
(72) Inventor: URSETTA, Frank, Chicago, IL 60647 (US); SAUTNER, Joshua, C., Chicago, IL 60706 (US)
(74) Representative: Gill Jennings & Every LLP
(86) International application number: PCT/US2015/022747
(87) International publication number: WO 2015/148803

(56) References cited:
- EP-A1- 2 972 167
- WO-A1-02/059555
- JP-A- 2006 205 207
- US-A- 4 442 714
- US-A- 5 146 790
- US-A1- 2007 062 311
- US-A1- 2007 089 538
- US-A1- 2007 113 684

## Description

### BACKGROUND OF THE INVENTION

### Field of Invention

The present invention relates to a system and method for reducing rotation noise in a magnetoelastic device, and for measuring torque, angular speed, and angular orientation. More specifically, the present invention relates to a system and method for creating one or more magnetically conditioned regions on a rotatable shaft or disk-shaped torque sensing element, wherein rotation noise produced by the element due to magnetic field variations is substantially negated. The present invention also relates to a system and method for creating one or more magnetically conditioned regions on a rotatable shaft or disk-shaped element, so that the torque, angular speed, and angular orientation can be determined based on the output of magnetic field sensors.

### Description of the Related Art

In the control of systems having rotating drive shafts, torque and speed are fundamental parameters of interest. Therefore, the sensing and measurement of torque in an accurate, reliable, and inexpensive manner has long been a primary objective of such control system designs.

U.S. Pat. Nos. 5,351,555 and 5,520,059 to Garshelis, describe torque sensing devices that include a shaft, and a ring of magnetoelastically active material disposed around the shaft. U.S. Pat. No. 6,047,605 to Garshelis, describes a torque sensing device that does not include a ring, rather, the shaft itself is formed of material that includes a magnetoelastically active region. In each of those torque sensing devices, the magnetoelastically active region includes one or more magnetically conditioned regions that are magnetically polarized in a circumferential direction and possess sufficient magnetic anisotropy to return the magnetization in the region, following the application of torque to the shaft, to the circumferential direction when the applied torque is reduced to zero. When a torque is applied to the shaft, the circumferential magnetic orientations of the magnetically conditioned regions reorient such that they exhibit helical magnetic orientations having both circumferential and axial components. Magnetic field sensors mounted proximate to the magnetically conditioned regions, without contacting the regions, are configured to sense only the axial components of magnetic fields produced by the regions.

Theoretically, when no torque is applied to the shaft of the '555, '059, or '605 Patents, no axial magnetic field components are present, and the magnetic field sensors produce no output. When torque is applied to the shaft, axial magnetic field components are produced in proportion to the applied torque, and the magnetic field sensors output electrical signals that are indicative of the applied torque.

U.S. Pat. No. 6,513,395 to Jones, describes a torque sensing device that includes a disk-shaped member having a magnetoelastically active region disposed thereon. The magnetoelastically active region includes one or more magnetically conditioned regions that are magnetically polarized in a circumferential direction when no torque is applied to the disk. When a torque is applied to the disk, the circumferential magnetic orientations of the magnetically conditioned regions reorient such that they exhibit circumferential, axial, and radial components. Magnetic field sensors mounted proximate to the magnetically conditioned regions, without contacting the regions, are configured to sense only the axial, or only the radial, components of magnetic fields produced by the regions.

Theoretically, when no torque is applied to the disk of the '395 Patent, no axial or radial magnetic field components are present, and the magnetic field sensors produce no output. When torque is applied to the disk, axial and radial magnetic field components are produced in proportion to the applied torque, and the magnetic field sensors output electrical signals that are indicative of the applied torque.

US2013091960 to Lee, describes a torque sensing device with a disk-shaped member having a magnetoelastically active region that includes magnetically conditioned regions that are magnetically polarized in the axial direction. Magnetic field sensors oriented in a circumferential direction output electrical signals that are indicative of a torque applied to the disk.

Each of the aforementioned torque sensing devices generally incorporates a torque transducer (e.g., ring, shaft, or disk) having a magnetoelastically active region that is formed by first providing a material that possesses sufficient anisotropy to return the magnetization to the quiescent, or initial direction, when the applied torque is reduced to zero. Magnetic anisotropy may be induced by physical working of the transducer or by other methods. Illustrative methods for inducing magnetic anisotropy are disclosed in the ' 555 and '059 Patents.

Following the introduction of magnetic anisotropy to the transducer, the transducer must be polarized in the desired direction or directions (i.e., one or more magnetically conditioned regions must be formed in the magnetoelastically active region). The '555 and '059 Patents describe a method of polarizing a transducer by rotating it in the field near two opposite magnetic poles as provided by a horseshoe magnet. The '079 Application describes a method of polarizing a transducer by rotating it in the field near a rectangular NdFeB magnet.

During operation, each of the aforementioned torque sensing devices generally incorporates a torque transducer with a magnetically conditioned region that is magnetically polarized in a first direction when the transducer is in the quiescent state (i.e., when no torque is applied to the transducer). One or more magnetic field sensors are mounted proximate to the magnetically conditioned region such that each magnetic field sensor has a sensitive direction that is perpendicular to the first direction. The torque sensing devices rely on the principle that, because the magnetic field sensors are not capable of sensing magnetic field components that are perpendicular to their sensitive directions, each magnetic field sensor produces no output when the transducer is in the quiescent state. When a torque is applied to the transducer, the magnetic field produced by the magnetically conditioned region reorients such that magnetic field components are sensible by the magnetic field sensors, and the magnetic field sensors output electrical signals that are indicative of the applied torque.

Theoretically, the methods used to magnetize (i.e., polarize) the transducers of the prior art torque sensing devices result in consistent dipole alignment in accordance with a magnetic field applied in a particular direction and at a constant strength. However, those prior art transducers often have physical irregularities that may result from inconsistent alloy composition or crystal displacements, or may be otherwise unintentionally introduced during the fabrication process. Such irregularities can result in localized areas within the magnetoelastically active region in which the direction and/or strength of the magnetic field varies from its theoretical value. For example, in theory, a circumferentially polarized region exhibits no magnetic field components in the radial or axial directions while in the quiescent state. However, in actuality, such a region will exhibit radial and/or axial magnetic field components while in the quiescent state due to the aforementioned magnetic field variations. Such magnetic field variations are referred to as rotation noise, and can negatively affect the accuracy of prior art torque sensing devices.

Therefore, there exists a need for a method of magnetizing a torque transducer, wherein the method accounts for physical irregularities in the transducer, and wherein the method results in the elimination of rotation noise when the transducer is used as a torque sensing device. There further exists a need for a system for performing such a method.

U.S. Pat. App. No. 12/790,350 to Lee, describes a speed sensor for a rotating shaft. A magnetic field is output from each of several magnetic portions on the surface of the shaft, and magnetic field sensors output a signal corresponding to the rotational speed of the shaft. The present invention provides alternative systems and methods for determining the rotational speed of a rotating element.

US2013232764 discloses a method of manufacturing a magnetic torque sensing device comprising the steps of: providing a generally disk-shaped member having opposite generally circular spaced apart surfaces and a central axis of rotation, wherein the disk-shaped member includes at least a portion that is both ferromagnetic and magnetorestrictive, wherein said portion is capable of producing a magnetic field that varies with a torque applied to the disk-shaped member, and wherein said portion possesses sufficient magnetic anisotropy to return the magnetization in said portion to an initial state when the torque applied to the disk-shaped member is reduced to zero; positioning a pair of oppositely polarized permanent magnets proximate to the surface of the disk-shaped member at a first distance from a surface of the disk-shaped member; and rotating the disk-shaped member about its central axis to form two annular, oppositely polarized, magnetically conditioned regions.

### SUMMARY OF THE INVENTION

The present invention, as described herein, is generally applicable to the magnetization of any shaft or disk-shaped member that is rotatable about an axis and, in some instances, is capable of functioning as a torque transducer.

Among other features, the invention provides a method for magnetizing a torque transducer wherein the magnetization field direction is adjusted during the magnetization process to eliminate rotation noise in the transducer.

The invention also provides a magnetoelastic torque transducer that produces essentially no rotation noise.

The invention includes a system for magnetizing a torque transducer such that the magnetization field direction is adjusted during the magnetization process to eliminate rotation noise in the transducer.

The invention includes a system and method for determining the angular speed or the angular position of a rotating element.

Objects, advantages, and features of the invention may become hereinafter apparent, and the nature of the invention may be more clearly understood by reference to the following detailed description of embodiments of the invention, the appended claims, and to the several drawings attached herein.

### BRIEF DESCRIPTION OF THE DRAWINGS

FIG. 1 is a top view of an exemplary disk, which may be magnetized in accordance with an embodiment of the present invention;
FIG. 2 is a side view of a system for magnetizing a disk in accordance with an embodiment of the present invention;
FIG. 3 is a top view of a system for magnetizing a disk in accordance with an embodiment of the present invention;
FIG. 4 is a flow chart illustrating a method for manufacturing a magnetoelastic torque sensing device in accordance with an embodiment of the present invention;
FIG. 5 is a top view of a system for magnetizing a disk in accordance with an embodiment of the present invention;
FIG. 6 is a side view of a system for magnetizing a disk in accordance with an embodiment of the present invention;
FIG. 7 is a top view of a system for magnetizing a disk in accordance with an embodiment of the present invention;
FIG. 8 is a side view of a system for magnetizing a shaft in accordance with an embodiment of the present invention;
FIG. 9 is a side view of a system for magnetizing a shaft in accordance with an embodiment of the present invention;
FIG. 10 is a side view of a system for magnetizing a disk in accordance with an embodiment of the present invention;
FIG. 11 is a perspective view of a system for magnetizing a disk in accordance with an embodiment of the present invention;
FIG. 12 includes test results related to an embodiment of the present invention;
FIG. 13 is a perspective view of a system for magnetizing a disk in accordance with an embodiment of the present invention; and
FIG. 14 includes test results related to an embodiment of the present invention.

### DETAILED DESCRIPTION OF EMBODIMENTS OF THE INVENTION

Several embodiments of the invention are described for illustrative purposes, it being understood that the invention may be embodied in other forms not specifically shown in the drawings. The figures herein are provided for exemplary purposes and are not drawn to scale.

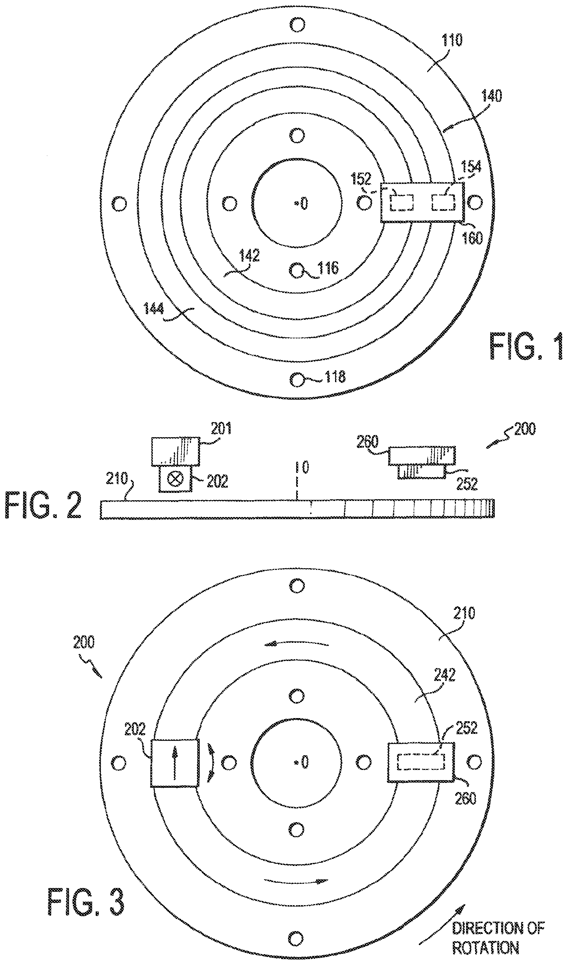

Turning first to FIG. 1, shown therein is a top view of an exemplary disk-shaped member (i.e., disk) 110, which may be magnetized in accordance with the present invention. It should be noted that the invention can also be used with a shaft as the torque transducing element. The disk 110 is formed of ferromagnetic material and is, or at least includes, a magnetoelastically active region 140. The material selected for forming the disk 110 must be at least ferromagnetic to ensure the existence of magnetic domains for at least forming a remanent magnetization in the magnetoelastically active region 140, and must be magnetostrictive such that the orientation of magnetic field lines in the magnetoelastically active region 140 may be altered by the stresses associated with applied torque. The disk 110 may be completely solid, or may be partially hollow. The disk 110 may be formed of a homogeneous material or may be formed of a mixture of materials. The disk 110 may be of any thickness, and is preferably about 3 mm thick.

The top and bottom surfaces of the disk 110 may be flat, or may have variable thickness in cross-section from the center of the disk 110 to the outer edge. However, the portion of the disk that constitutes the magnetoelastically active region 140 is preferably flat. When intended for use in automotive applications, for example, the disk 110 may include inner holes 116 and outer holes 118 to allow for attachment to drivetrain elements such as engines and transmissions.

After magnetization, the magnetoelastically active region 140 of the disk 110 includes one or more magnetically conditioned regions 142, 144. Preferably the disk 110 includes at least two radially distinct, annular, oppositely polarized magnetically conditioned regions 142, 144, defining the magnetoelastically active region 140 of the disk 110. Inner magnetically conditioned region 142 and outer magnetically conditioned region 144 may be formed with or without a gap therebetween. In other exemplary disks, the magnetoelastically active region may include less than two, or more than two magnetically conditioned regions.

When the disk 110 is used as a torque sensing device, magnetic field sensors 152, 154 are positioned proximate to the magnetoelastically active region 140, such that each magnetic field sensor 152, 154 is placed over a corresponding magnetically conditioned region 142, 144. The magnetic field sensors 152, 154 are oriented such that their sensitive directions are perpendicular to the direction of magnetization in the corresponding magnetically conditioned regions 142, 144. That configuration ensures that the indicative signals outputted by the magnetic field sensors 152, 154 vary linearly with respect to variations in the torque applied to the disk 110. The magnetic field sensors 152, 154 may be mounted on one or more sensor platforms 160, which maintain the magnetic field sensors' proximity to the disk 110, while preventing them from contacting the disk 110.

During use as a torque sensing device, the disk 110 may rotate many times per second, causing different parts of the disk 110 to be near the magnetic field sensors 152, 154 at different times. The torque sensing device may therefore include multiple sensor platforms 160, which may reduce the negative effects of rotation noise. Preferably, the polarities of the two magnetically conditioned regions 142, 144 are anti-parallel for a particular angular position on the disk 110, which allows the torque sensing device to cancel the undesired effects of far-field magnetic noise. Exemplary magnetic field sensor arrangements are described in the '079 Application.

A method for magnetizing the exemplary disk 110 of FIG. 1 may include placing permanent magnets proximate to the disk 110 as the disk 110 it is rotated, thus creating the inner and outer magnetically conditioned regions 142, 144. Such a method is described in the '079 Application. After the magnets are removed, the magnetically conditioned regions 142, 144 may, for example, have remanent magnetization states that are substantially circumferential. However, because the chemical composition and/or the crystalline structure of the disk 110 is not homogeneous, or due to other factors, the remanent magnetization produced is not entirely circumferential, but instead exhibits radial magnetic field components that are not uniform for different angular positions of the disk 110. Those non-uniformities contribute to a rotation noise pattern of the disk 110, which has been found to be repeatable even if the disk 110 has been degaussed and remagnetized on multiple occasions.

FIGS. 2 and 3 illustrate a system 200 for performing a process by which a magnetically conditioned region 242 may be formed on an annular portion of an exemplary disk 210. FIG. 2 shows a side view of the disk 210, and FIG. 3 shows a top view of the disk 210. For simplicity, the system 200 illustrated in FIGS. 2 and 3 is applicable to a process in which only a single magnetically conditioned region 242 (or magnetically conditioned "band") is formed on the disk 210. However, processes for forming two or more magnetically conditioned regions on the disk 210 are within the scope of the invention, and will be understood in view of the description and drawings provided herein.

The system 200 includes a magnet holder 201 for holding a magnetizing magnet 202 proximate to a surface of the disk 210. The X in FIG. 2, and the arrow in FIG. 3, shown on the magnetizing magnet 202, indicate that the magnetizing magnet 202 has a magnetic orientation that is parallel to the surface of the disk 210 in the circumferential direction. The magnet holder 201 may be capable of rotating about a central axis of the magnetization magnet 202 perpendicular to the surface of the disk, such that the magnetic orientation of the permanent magnet 202 deviates from the circumferential direction, but remains parallel to the surface of the disk 210. The rotational ability of the magnet holder 201, shown in FIG. 2, is indicated by the arrows shown to the right of the magnetizing magnet 202 in FIG. 3.

The system 200 further includes a magnetic field sensor 252 for measuring the magnetic field produced by the magnetically conditioned region 242. Magnetic field sensors 252 are known in the art and include magnetic field vector sensor devices such as flux-gate inductors, Hall Effect sensors, and the like. The magnetic field sensor 252 is mounted on a sensor platform 260, which holds the magnetic field sensor 252 proximate to the surface of the disk 210.

The system 200 further includes a computer system (not shown), which may include one or more computing devices. The computer system is capable of receiving, storing, and analyzing data, including measurement data produced by the one or more magnetic field sensors 252, as well as data indicating the angular position of the disk 210. The computer system is also capable of producing output to control the position (e.g., rotation angle) of the one or more magnetization magnets 202 and/or controlling one or more solenoid currents as discussed in further detail below. Accordingly, the computer system may include one or more memory devices and one or more processors, and may be capable of executing one or more software algorithms in order to perform steps in accordance with the present invention.

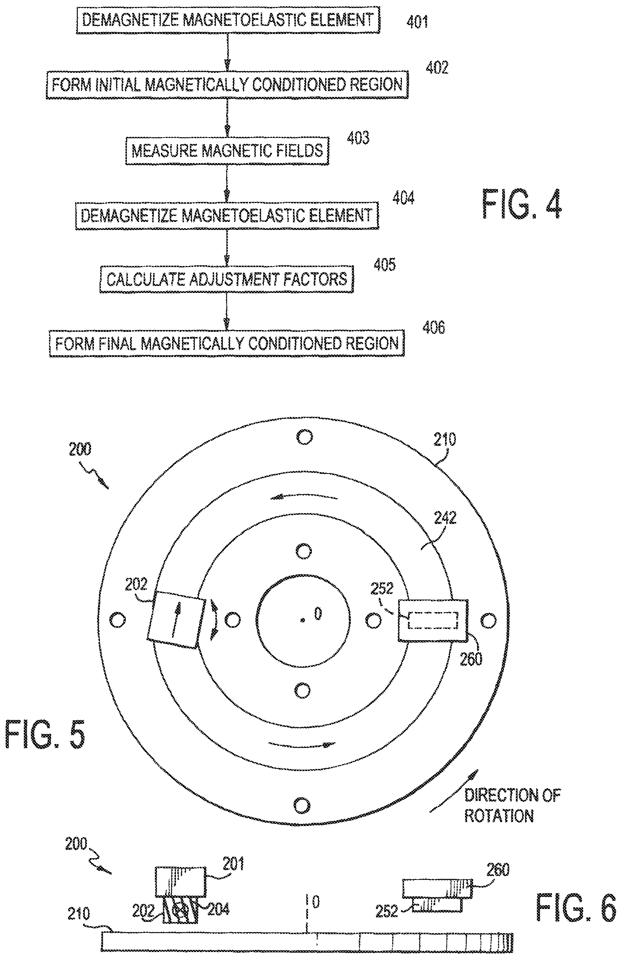

FIG. 4 is a flowchart illustrating exemplary steps for forming a magnetically conditioned region 242 on the disk 210, such that the magnetically conditioned region 242 exhibits little or no rotation noise, in accordance with the present invention.

In step 401, the magnetization status of the disk 210 is randomized (i.e., the disk 210 is degaussed/demagnetized). Demagnetization may be accomplished by bringing an AC magnetic field source near the magnetoelastically active region of the disk 210, while the disk 210 rotates about its central axis O. The introduction of the AC magnetic field results in many small magnetic domains with random orientations being produced at various parts of the magnetoelastically active region 240. Accordingly, the net magnetic field produced by the magnetoelastically active region 240 is small. Alternatively, a disk 210 having a magnetoelastically active region 240 with no net magnetization may be provided, in which case randomization step 401 is not required.

In step 402, a magnetically conditioned region 242 is formed on the disk 210 by bringing a DC magnetic field source, such as a permanent magnetization magnet 202, near the surface of the disk 210, while the disk 210 rotates about its central axis O. In one embodiment, the magnetization magnet 202 is a permanent NdFeB magnet. In the nonlimiting example shown in FIG. 3, during formation of the magnetically conditioned region 242, the magnetization magnet 202 is held with its magnetic orientation in a clockwise circumferential direction while the disk 210 is rotated in a counter-clockwise direction. That results in the formation of a magnetically conditioned region 242 that is generally polarized in a counter-clockwise circumferential direction, opposite the magnetic orientation of the permanent magnet 202. The arrows in FIG. 3, shown in the magnetically conditioned region 242, indicate that the magnetically conditioned region 242 has a magnetic orientation that is generally in the counter-clockwise circumferential direction.

It will be understood that, while only one magnetically conditioned region 242 is shown in FIG. 3 for simplicity, step 402 may include the positioning of two or more magnetization magnets near the surface of the disk 210 in order to form two or more magnetically conditioned regions thereon. The '079 Application describes an exemplary process for forming multiple magnetically conditioned regions on a disk that is consistent with step 402.

Step 402 results in the formation of a magnetically conditioned region 242 (or regions) that is generally polarized in a circumferential direction. However, due to physical irregularities in the disk 210, or for other reasons, the polarization of the magnetically conditioned region 242 is slightly non-circumferential. For instance, portions of the magnetically conditioned region 242 may produce magnetic fields having radial components. Moreover, the polar deviation from the circumferential direction is different at different angular portions of the magnetically conditioned region 242. Accordingly, following step 402, the magnetically conditioned region 242 exhibits undesirable rotation noise. It has been found that the rotation noise pattern of a particular disk is repeatable. In other words, a specific angular portion of the magnetically conditioned region will exhibit the same rotation noise after its initial magnetization as it exhibits after subsequent demagnetization and remagnetization, provided the same process is used for the magnetization and remagnetization.

In step 403, the magnetization magnet 202 is removed from the proximity of the disk 210, and the magnetic field sensor 252 is used to measure the magnetic field produced by different angular portions of the magnetically conditioned region 242 when the disk 210 is in the quiescent state. In performing step 403, a series of discrete measurements are taken, each discrete measurement corresponding to a different angular position of the disk 210.

For example, to obtain a first discrete measurement, a stationary magnetic field sensor 252 may be positioned proximate to the magnetically conditioned region 242 while the disk 210 is in the quiescent state. The magnetic field sensor 252 is positioned with its sensitive direction parallel to the surface of the disk 210 in the radial direction so that the magnetic field sensor 252 will not generate an output based on the desired circumferential magnetic field components produced by the magnetically conditioned region 242. However, the magnetic field sensor 252 will generate an output based on undesired radial magnetic field components produced by the magnetically conditioned region 242, which can result from the physical irregularities present during magnetization of the disk 210 in step 402. The computer system stores the output of the magnetic field sensor 252 (i.e., the rotation noise measurement), along with a value representing the corresponding angular position of the disk 210. The value representing the angular position of the disk 210 may be provided to the computer system by an additional angular position sensor (not shown). Alternatively, or in addition, the computer system may be configured to control the angular position of the disk according to an algorithm provided thereon.

A second discrete measurement may be obtained by slightly rotating the disk 210 to a second angular position and allowing the disk 210 to remain in the quiescent state. The magnetic field sensor 252 then acquires a second rotation noise measurement, which is stored, along with a value representing the second angular position. Preferably, the process of obtaining discrete measurements is repeated until the disk 210 has undergone at least one full 360 degree rotation, and a data map has been created for the disk 210. For each angular position of the disk 210, the data map includes a corresponding rotation noise measurement. By increasing the number of angular positions at which discrete measurements are obtained, the resolution of the data map is increased, and the effectiveness of the invention is improved. In one embodiment, discrete measurements are obtained for 360 distinct angular positions of the disk 210. It is contemplated that, for a disk 210 having more than one magnetically conditioned region 242, multiple magnetic field sensors 252 may be used to measure rotation noise, and the resulting data map will include rotation noise data for each of the magnetically conditioned regions 242. It should be noted that a slight torque may be applied to the disk 210 during the measurement process so that the rotational speed of the disk 210 remains substantially consistent. However, the value of that slight torque is orders of magnitude less than those of typical torques that would be applied to the disk 210 during its actual use in a torque sensing device application. Accordingly, any slight torque applied to the disk 210 during the measurement process does not negatively affect the measurements obtained.

In step 404, the magnetization status of the disk 210 is again randomized. In other words, in step 404, the magnetically conditioned region 242 formed during step 402 is degaussed using a process similar to that described with respect to step 401. For example, step 404 may involve positioning an AC magnetic field source near the magnetically conditioned region 242, while the disk 210 rotates about its central axis O. The demagnetization step is beneficial because it erases all previously magnetized regions on the disk 210, and allows for adjustments made during subsequent remagnetization to have a predictable influence on the magnetization status of the disk 210. However, it should be noted that demagnetization of the disk 210 is not always necessary to achieve the desired results of the disclosed method (i.e., reduced rotation noise). Therefore, step 404 is not a required step.

In step 405, the computer system calculates adjustment factors based on the measurements obtained in step 403. In an exemplary embodiment of the invention, the adjustment factors include, for each angular position of the disk 210, an adjustment angle value for the magnetization magnet 202. In calculating the adjustment factors, the computer system analyzes the data map, and determines an angle by which the magnetization magnet 202 should be offset during subsequent remagnetization of the disk 210 at each angular position, so that the corresponding portion of the magnetically conditioned region 242 will not produce rotation noise after remagnetization.

For example, after the magnetically conditioned region 242 is formed using a circumferentially polarized magnetization magnet 202 in accordance with step 402, the magnetic field sensor 252 may, in step 403, measure a slight radial magnetic field component produced by a first angular portion of the magnetically conditioned region 242 when the disk 210 is in the quiescent state. That radial component is, of course, undesired rotation noise. In step 405, the computer system may determine that by offsetting the polarity of the magnetization magnet 202 from the circumferential direction by one degree during formation of the first angular portion of the magnetically conditioned region 242, that portion will not produce any radial magnetic field component when the disk 210 is in the quiescent state, after formation of the magnetically conditioned region 242 is complete. Accordingly, the computer system will generate an adjustment factor of one degree for the angular position of the disk 210 corresponding to the first angular portion of the magnetically conditioned region 242. It should be noted that step 405 is independent of step 404. Therefore, in instances in which step 404 is performed, step 405 may be performed before, after, or concurrently with step 404.

In step 406, a new magnetically conditioned region 242 is formed on the disk 210 by a process similar to that described in step 402, in the same location as the magnetically conditioned region formed in step 402. However, during step 406, the computer system monitors the angular position of the disk 210 during its rotation, and the angular offset of the magnetization magnet 202 is continuously adjusted based on the angular position of the disk 210 and the previously calculated adjustment factors. The angular offset of the magnetization magnet 202 may be adjusted by rotating the magnet holder 201 to which the magnetization magnet 202 is attached. The angular offset of the magnetization magnet 202 during remagnetization of the disk 210 in step 406 cancels the undesired effects of the physical irregularities of the disk 210, which can result in rotation noise.

FIG. 5 illustrates the disk 210 during the performance of step 406. As shown in FIG. 5, the polarity of the magnetization magnet 202 is slightly offset from the circumferential direction according to an adjustment factor that corresponds to the angular portion of the magnetically conditioned region 242 located directly beneath the magnetization magnet 202. Because adjustment factors may differ for different angular positions of the disk 210, the angular offset of the magnetization magnet 202 may be adjusted many times during each single rotation of the disk 210. In performing step 406, the disk 210 may rotate many times around its central axis O, during which time the magnetization magnet 202 is brought into the proximity of the surface of the disk 210, held near the disk 210 for several rotations, and then removed from the proximity of the disk 210. Following remagnetization of the disk 210 in accordance with step 406, the magnetically conditioned region 242 produces substantially no rotation noise.

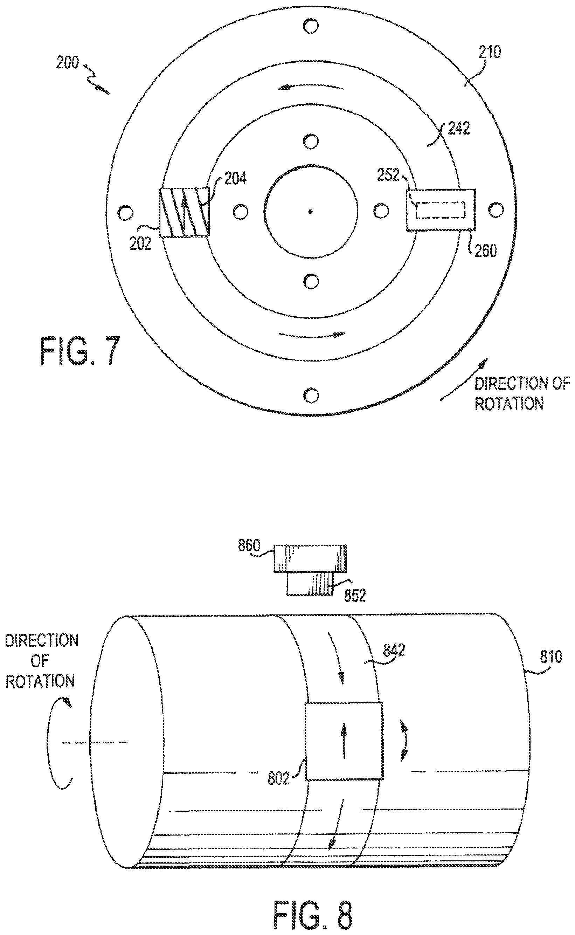

FIGS. 6 and 7 illustrate the system 200 for forming a magnetically conditioned region 242 on a disk 210, in accordance with an alternate exemplary embodiment of the present invention. FIG. 6 shows a side view of the disk 210, and FIG. 7 shows a top view of the disk 210. As in FIGS. 2 and 3, the magnetic orientation of the permanent magnetization magnet 202 in FIGS. 6 and 7 is in the circumferential direction. However, unlike FIGS. 2 and 3, FIGS. 6 and 7 show the system 200 further including a solenoid 204 disposed around the magnetization magnet 202, the central axis of the solenoid 204 oriented in the radial direction, perpendicular to the magnetic orientation of the magnetization magnet 202. The solenoid 204 is disposed such that, when an electrical current is applied thereto, the combination of the solenoid 204 and the magnetization magnet 202 forms an additional electromagnet, which is magnetically oriented in the radial direction. For simplicity, the solenoid 204 in FIGS. 6 and 7 is shown having four turns. However, the solenoid preferably includes more than four turns, and will typically include approximately 150 turns. It should be noted that the solenoid 204 may be positioned in proximity to, but not around, the magnetization magnet 202.

In this alternate embodiment of the present invention, the adjustment factors calculated during step 405 include, for each angular position of the disk 210, an adjustment current value for the solenoid 204. In calculating the adjustment factors, the computer system analyzes the data map produced in step 403, and determines an electrical current that should be applied to the solenoid 204 during subsequent remagnetization of the disk 210 at each angular position, so that the corresponding portion of the magnetically conditioned region 242 will not produce rotation noise after remagnetization.

For example, in step 405, the computer system may determine that by applying a direct current of 100 mA to the solenoid 204 during formation of a first angular portion of the magnetically conditioned region 242, that portion will not produce any radial magnetic field component when the disk 210 is in the quiescent state, after formation of the magnetically conditioned region 242 is complete. Accordingly, the computer system will generate an adjustment factor of 100 mA for the angular position of the disk 210 corresponding to the first angular portion of the magnetically conditioned region 242.

With continued reference to the alternative embodiment of the present invention, during step 406, the computer system monitors the angular position of the disk 210 during its rotation, and causes an electrical current to be applied to the solenoid 204, the electrical current being continuously adjusted based on the angular position of the disk 210 and the previously calculated adjustment factors. The electrical current applied to the solenoid 204 during remagnetization of the disk 210 in step 406 cancels the undesired effects of the physical irregularities of the disk 210, which can result in rotation noise.

In other exemplary embodiments of the present invention, formation of the magnetically conditioned region 242 may be achieved by performing a rapid adjustment process. In that process, the magnetic field sensor 252 obtains discrete magnetic field measurements for corresponding angular positions of the disk 210 while the disk 210 rotates. Adjustment factors (e.g., angular offsets or adjustment current values) are calculated for each angular position of the disk 210 based on the corresponding magnetic field measurement. Simultaneously, the magnetization magnet 202 is in proximity to the disk 210, and is being adjusted such that when a particular angular portion of the magnetically conditioned region 242 is beneath the magnetization magnet 202, the most recent adjustment factor for the corresponding angular position is applied to the magnetization magnet 202. Adjustment of the magnetization magnet may be accomplished, for example, by applying an angular offset to the magnetization magnet 202, or applying an electrical current to the adjustment solenoid 204. The process, which involves the rapid measurement of magnetic fields, calculation of adjustment factors, and adjustment of the magnetization magnet 202, continues during several rotations of the disk 210. Preferably, the process continues until the magnetic field sensors 252 indicate an acceptably low level of rotation noise for the entire magnetically conditioned region 242. When the level of rotation noise is acceptably low, the process of measurement, calculation, and adjustment continues as the magnetization magnet 210 is slowly withdrawn from the proximity of the disk 210, after which the process is complete.

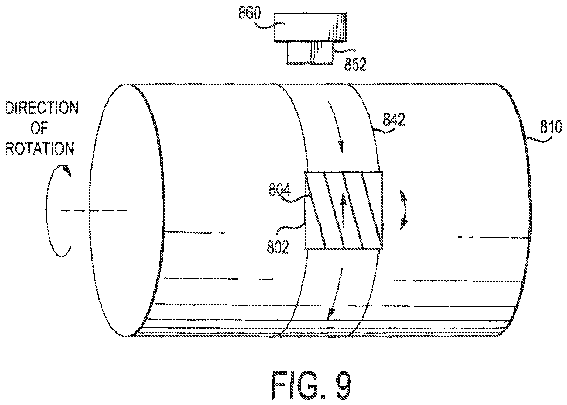

It should be noted that the entirety of the above disclosure with respect to a disk-shaped torque sensing device is analogously applicable to other types of torque sensing devices, such as shafts, rings, etc. FIGS. 8 and 9 illustrate other alternate exemplary embodiments of the present invention as applied to the magnetization of a shaft-type torque sensing device. According to the method described above with respect to FIG. 4, a shaft 810 having a magnetoelastically active region is provided. A magnetization magnet 802 may be used to form a generally circumferentially polarized magnetically conditioned region 842 on the shaft 810. However, after that initial magnetization, portions of the magnetically conditioned region 842 may produce magnetic fields having undesired axial components (i.e., rotation noise). A magnetic field sensor 852 having an axially oriented sensitive direction, and disposed on a sensor platform 860, may be used to obtain rotation noise measurements that correspond to different angular positions of the shaft 810. Those rotation noise measurements may be used to calculate adjustment factors that include adjustment angles for the magnetization magnet 802, or adjustment current values for a solenoid 804. The shaft 810 is demagnetized, if necessary, and a new magnetically conditioned region 842 is formed on the shaft 810 during a remagnetization step. During the remagnetization of the shaft 810, the angular offset of the magnetization magnet 802, or the electrical current applied to the solenoid 804, is continuously adjusted based on the adjustment factors, so as to result in the formation of a magnetically conditioned region 842 that produces substantially no rotation noise. For example, as shown in FIG. 8, the magnetization magnet 802 may be rotated about an axis that is perpendicular to a plane that is tangent to a surface of the shaft 810. For simplicity, the shaft 810 shown in FIGS. 8 and 9 includes only a single magnetically conditioned region 842 formed thereon. However, processes for forming two or more magnetically conditioned regions on the shaft 810 are within the scope of the invention, and will be understood in view of the description and drawings provided herein.

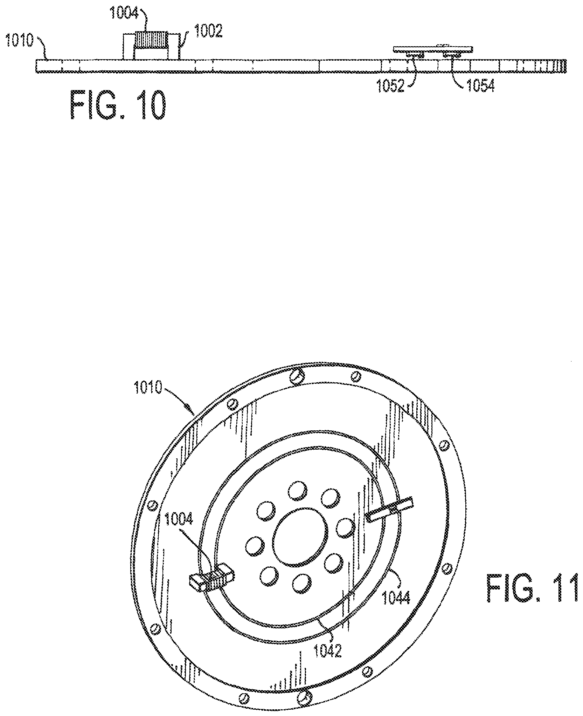

FIGS. 10 and 11 illustrate another embodiment of the present invention in which a solenoid 1004 has been created by forming a wire coil around a permanently magnetized core 1002, which may be a C-shaped magnetized core as shown in those figures. The magnetized core 1002 may be a ferrite core or may be a high-permeability, low coercivity material such as electrical steel, Ni-Fe (Mu-Metal or similar), or cast iron. The solenoid 1004 may be placed proximate to the surface of a disk 1010 having multiple magnetically conditioned regions 1042, 1044 thereon. Magnetic field sensors 1052, 1054 may also be disposed proximate to the surface of the disk 1010. The disk 1010 may undergo a magnetization process as illustrated in FIG. 4, in which the adjustment factors calculated during step 405 include, for each angular position of the disk 1010, an adjustment current value for the solenoid 1004. During step 406, the computer system may monitor the angular position of the disk 1010 during rotation, and cause an electrical current to be applied to the solenoid 1004, the electrical current being continuously adjusted based on the angular position of the disk 1010 and the previously calculated adjustment factors. Such a configuration provides for the compensation of individual magnetically conditioned regions 1042, 1044, or the simultaneous compensation of multiple magnetically conditioned regions 1042, 1044. Furthermore, multiple compensation cores in different solenoids may be used simultaneously.

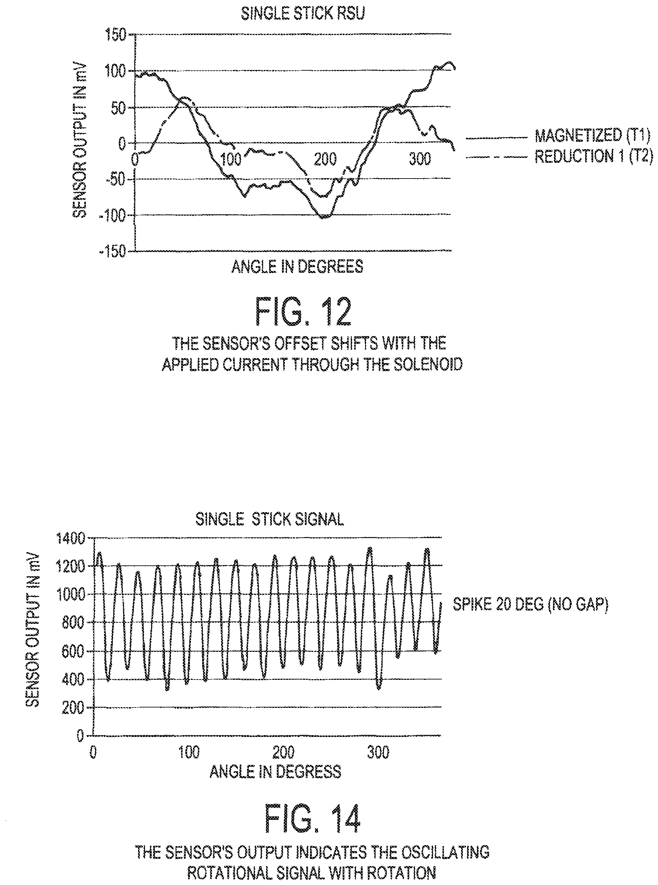

FIG. 12 includes the results of tests performed on a disk 1010, such as the one shown in FIGS. 10 and 11. In FIG. 12, output from a magnetic field sensor is shown in a first trace T1, indicating the rotation noise present in the disk 1010 prior to the disk 1010 undergoing remagnetization, as disclosed in step 406. Output from a magnetic field sensor is shown in a second trace T2, indicating the rotation noise present in the disk 1010 subsequent to the disk 1010 undergoing remagnetization, as disclosed in step 406.

The disk 1010 shown in FIGS. 10 and 11 may also undergo a rapid adjustment process, as described above, in which the magnetic field sensors 1052, 1054 obtain discrete magnetic field measurements for corresponding angular positions of the disk 1010, while the disk 1010 rotates. Adjustment factors are calculated for each angular position of the disk 1010 based on the corresponding magnetic field measurements. Simultaneously, the solenoid 1004 and magnetized core 1002 are in proximity to the disk 1010, and is being adjusted such that when particular angular portions of the magnetically conditioned regions 1042, 1044 are beneath the magnetized core 1002, the most recent adjustment factor for the corresponding angular position is accomplished by, for example, applying an electrical current to the solenoid 1004.

Any of the systems and methods described herein may be modified to create one or more magnetically conditioned regions on a rotatable element, those one or more magnetically conditioned regions exhibiting a DC magnetic field that varies with rotation angle. For instance, the systems and methods described herein may be modified so that one or more magnetic field sensors positioned proximate to a magnetically conditioned region of a rotatable element output a desired noise signal, such as a regular peak in magnetic field sensor output, every few degrees of rotation. Such a modification would allow the invention to operate as a sensor capable of detecting the angular speed of the rotatable element.

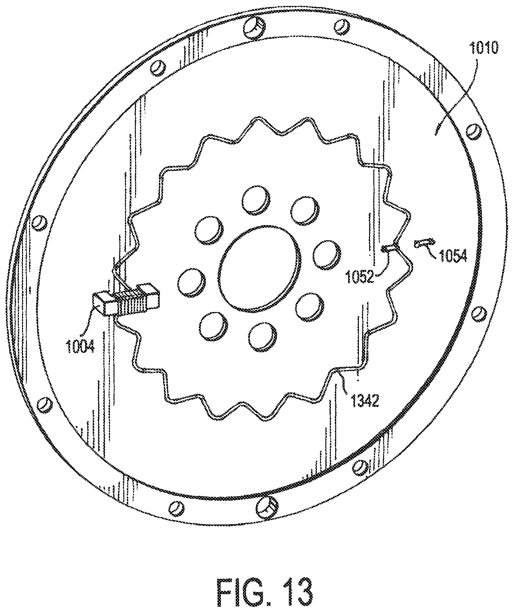

Turning back to FIG. 10, in an alternative embodiment of the invention, the solenoid 1004 may be used to form a magnetically conditioned region 1342 on the disk 1010, the magnetically conditioned region 1342 having a sinusoidal pattern as shown in FIG. 13. To achieve that result, a controlled oscillating current is applied to the solenoid 1004 as the disk 1010 rotates. While the magnetization pattern shown in FIG. 13 is substantially sinusoidal, with a substantially radial magnetization, the current applied to the solenoid 1004 during magnetization may be controlled such that any desired pattern of magnetization is produced in the disk 1010. Following the creation of the magnetically conditioned region 1342, the rotational speed of the disk 1010 can be determined by analyzing the output signal frequency of the magnetic field sensors 1052, 1054 as the disk 1010 rotates.

FIG. 14 includes the results of tests performed on a disk 1010 having a magnetically conditioned region 1342, as shown in FIG. 13. The sensor output exhibits a substantially sinusoidal pattern that corresponds with the substantially sinusoidal pattern of the magnetically conditioned region 1342. Because the total number of peaks in the pattern of the magnetically conditioned region 1342 pattern is known, the rotational speed of the element (in rotations per unit time) can be calculated by dividing the number of peaks in the magnetic field sensor 1042 per unit time, by the total number of peaks in the magnetically conditioned region 1342.

In another embodiment of the present invention, a stationary disk 1010 may be used with several solenoids 1004 formed around magnetized cores 1002 to induce additional oscillating or wavelike magnetization patterns in the disk 1010.

Any of the systems and methods described herein may be modified so that, for instance, one or more magnetic field sensors positioned proximate to a magnetically conditioned region of a rotatable element output a desired noise signal, such as peaks of various heights in magnetic field sensor output, throughout rotation. Such a modification would allow the invention to operate as a sensor capable of detecting the relative orientation or angular position of the rotatable element.

The description and drawings provided herein are for exemplary or illustrative purposes and are not intended to limit the scope of the present invention. For example, the disclosed system and method may be used to form a torque transducer having axially polarized magnetically conditioned regions, wherein adjustment factors calculated to prevent undesired circumferentially or radially polarized magnetic field components are applied to reduce rotation noise.

## Claims

1. A method for manufacturing a magnetoelastic torque sensing device, the method comprising the steps of:
positioning a solenoid (204, 1004) formed around a permanently magnetized core (1002) in proximity to a magnetoelastic element;
rotating the magnetoelastic element (210) about a central axis whereby an initial magnetically conditioned region (242) is formed at a first location on the magnetoelastic element;
measuring magnetic fields produced by various portions of the initial magnetically conditioned region (242);
calculating one or more adjustment factors based on the measured magnetic fields;
rotating the magnetoelastic element (210) about the central axis while applying an electrical current to the solenoid (204, 1004) whereby a final magnetically conditioned region is formed at the first location on the magnetoelastic element, wherein the electrical current that is applied is adjusted based on the adjustment factors during the rotation of the magnetoelastic element (210).

2. The method of claim 1 further comprising the step of removing the initial magnetically conditioned region (242) from the magnetoelastic element (210).

3. The method of claim 2, wherein the step of removing the initial magnetically conditioned region (242) from the magnetoelastic element (210) includes at least positioning an AC magnetic field source in proximity to the magnetoelastic element and rotating the magnetoelastic element about the central axis.

4. The method of claim 1, wherein the step of measuring the magnetic fields comprises at least (a) placing the magnetoelastic element (210) in a quiescent state; (b) obtaining a magnetic field measurement corresponding to an angular position of the magnetoelastic element; (c) rotating the magnetoelastic element about a central axis by an angle amount; and (d) repeating (a) through (c) until the magnetoelastic element has undergone one full360 degree rotation.

5. The method of claim 1 further comprising the step of creating a data map comprising, for each of the various portions of the initial magnetically conditioned region (242), obtaining a magnetic field measurement and a corresponding angular position measurement.

6. A magnetoelastic torque sensing device manufactured by the method of claim 1.

7. The magnetoelastic torque sensing device of claim 6, wherein the magnetoelastic element (210) comprises a disk-shaped member.

8. The magnetoelastic torque sensing device of claim 6, wherein the magnetoelastic element comprises a shaft.

9. A system for manufacturing a magnetoelastic torque sensing device, the system comprising:
a permanently magnetized core (1002) configured to be positioned in proximity to a magnetoelastic element (210);
a solenoid (204, 1004) comprising a coil formed around the permanently magnetized core (1002);a magnetic field sensor (252) configured to sense a magnetic field produced by the magnetoelastic element (210);
a position sensor for sensing an angular position of the magnetoelastic element (210) during its rotation about a central axis; and
a computer for controlling an electrical current applied to the solenoid (204, 1004) based on the sensed angular position and a calculated adjustment factor, wherein the adjustment factor is calculated based on the sensed magnetic field for that angular position.

10. The system of claim 9, wherein the computer is adapted to receiving electrical signals outputted by the magnetic field sensor (252).

11. The system of claim 10, wherein the computer comprises software adapted to calculating adjustment factors based on the electrical signals outputted by the magnetic field sensor (252), and controlling the electrical current applied to the solenoid based on the adjustment factors.

12. A method for manufacturing a magnetoelastic torque sensing device, the method comprising the steps of:
positioning a DC magnetic field source in proximity to a magnetoelastic element (210) such that the DC magnetic field source is capable of forming a magnetically conditioned region (242) on the magnetoelastic element, wherein the DC magnetic field source includes a permanently magnetized core having a solenoid (204, 1004) disposed therearound;
positioning a magnetic field sensor (252) in proximity to the magnetoelastic element (210) such that the magnetic field sensor is capable of measuring magnetic fields produced by various portions of the magnetically conditioned region (242);
rotating the magnetoelastic element (210) about an axis;
measuring magnetic fields produced by the various portions of the magnetically conditioned region (242) on the magnetoelastic element (210);
calculating one or more adjustment factors based on the measured magnetic fields; and
adjusting the angular offset between the DC magnetic field source and the magnetoelastic element (210) for the various portions during the rotation of the magnetoelastic element (210) based on the adjustment factors.

13. The method of claim 12, wherein the steps of rotating the magnetoelastic element (210), measuring magnetic fields, calculating adjustment factors, and adjusting the DC magnetic field source are performed simultaneously.

14. The method of claims 1 or 12, wherein the adjustment modifies the magnetically conditioned region to exhibit a DC magnetic field that varies with rotation angle.

15. The method of claim 14, wherein the modified magnetically conditioned region (242) comprises a pattern of peaks that are circumferentially spaced about the magnetoelastic element (210).

16. The method of claim 15, wherein the pattern is substantially sinusoidal.

17. The method of claim 15, wherein the peaks are of various heights.

## Patentansprüche

1. Verfahren zum Herstellen einer magnetoelastischen Drehmomenterfassungsvorrichtung, wobei das Verfahren Folgendes umfasst:
Positionieren eines Solenoids (204, 1004), das in der Nähe eines magnetoelastischen Elements um einen permanent magnetisierten Kern (1002) herum gebildet ist;
Drehen des magnetoelastischen Elements (210) um eine Mittelachse, wodurch ein magnetisch konditionierter Anfangsbereich (242) an einer ersten Stelle des magnetoelastischen Elements gebildet wird;
Messen von Magnetfeldern, die von verschiedenen Abschnitten des magnetisch konditionierten Anfangsbereichs (242) erzeugt werden;
Berechnen eines oder mehrerer Anpassungsfaktoren basierend auf den gemessenen Magnetfeldern;
Drehen des magnetoelastischen Elements (210) um die Mittelachse, während ein elektrischer Strom an das Solenoid (204, 1004) angelegt wird, wodurch ein magnetisch konditionierter Endbereich an der ersten Stelle des magnetoelastischen Elements gebildet wird, wobei der angelegte elektrische Strom eingestellt wird basierend auf den Einstellfaktoren während der Drehung des magnetoelastischen Elements (210).

2. Verfahren nach Anspruch 1, ferner umfassend den Schritt des Entfernens des magnetisch konditionierten Anfangsbereichs (242) von dem magnetoelastischen Element (210).

3. Verfahren nach Anspruch 2, wobei der Schritt des Entfernens des magnetisch konditioniertem Anfangsbereichs (242) von dem magnetoelastischen Element (210) mindestens das Positionieren einer Wechselstrommagnetfeldquelle in der Nähe des magnetoelastischen Elements und das Drehen des magnetoelastischen Elements um die Mittelachse enthält.

4. Verfahren nach Anspruch 1, wobei der Schritt des Messens der Magnetfelder mindestens Folgendes umfasst: (a) Anordnen des magnetoelastischen Element (210) in einem Ruhezustand; (b) Erhalten einer Magnetfeldmessung entsprechend einer Winkelposition des magnetoelastischen Elements; (c) Drehen des magnetoelastischen Elements um eine Mittelachse um einen Winkel; und (d) Wiederholen von (a) bis (c), bis das magnetoelastische Element eine volle Drehung von 360 Grad ausgeführt hat.

5. Verfahren nach Anspruch 1, ferner umfassend den Schritt des Schaffens einer Datenkarte, umfassend, das Erhalten einer Magnetfeldmessung und einer entsprechenden Winkelpositionsmessung für jeden der verschiedenen Teile des magnetisch konditionierten Anfangsbereichs (242).

6. Magnetoelastische Drehmomenterfassungsvorrichtung, die nach dem Verfahren von Anspruch 1 hergestellt ist.

7. Magnetoelastische Drehmomenterfassungsvorrichtung nach Anspruch 6, wobei das magnetoelastische Element (210) ein scheibenförmiges Element umfasst.

8. Magnetoelastische Drehmomenterfassungsvorrichtung nach Anspruch 6, wobei das magnetoelastische Element eine Welle umfasst.

9. System zum Herstellen einer magnetoelastischen Drehmomenterfassungsvorrichtung, wobei das System Folgendes umfasst:
einen permanent magnetisierten Kern (1002), der konfiguriert ist, um in der Nähe eines magnetoelastischen Elements (210) positioniert zu werden;
ein Solenoid (204, 1004) mit einer Spule, die um den permanent magnetisierten Kern (1002) herum gebildet ist; einen Magnetfeldsensor (252), der konfiguriert ist, um ein von dem magnetoelastischen Element (210) erzeugtes Magnetfeld zu erfassen;
einen Positionssensor zum Erfassen einer Winkelposition des magnetoelastischen Elements (210) während seiner Drehung um eine Mittelachse; und
einen Computer zum Steuern eines an das Solenoid (204, 1004) angelegten elektrischen Stroms basierend auf der erfassten Winkelposition und einem berechneten Anpassungsfaktor, wobei der Anpassungsfaktor auf der Grundlage des erfassten Magnetfelds für diese Winkelposition berechnet wird.

10. System nach Anspruch 9, wobei der Computer angepasst ist, um elektrische Signale, die von dem Magnetfeldsensor (252) ausgegeben werden, zu empfangen.

11. System nach Anspruch 10, wobei der Computer Folgendes umfasst: Software zum Berechnen der Anpassungsfaktoren auf der Grundlage der elektrischen Signale, die von dem Magnetfeldsensor (252) ausgegeben werden, und zum Steuern des elektrischen Stroms, der an das Solenoid angelegt wird, auf der Grundlage der Anpassungsfaktoren.

12. Verfahren zum Herstellen einer magnetoelastischen Drehmomenterfassungsvorrichtung, wobei das Verfahren Folgendes umfasst:
Positionieren einer Gleichstrommagnetfeldquelle in der Nähe eines magnetoelastischen Elements (210), so dass die Gleichstrommagnetfeldquelle einen magnetisch konditionierten Bereich (242) auf dem magnetoelastischen Element bilden kann, wobei die Gleichstrommagnetfeldquelle einen permanent magnetisierten Kern mit einem um ihn angeordneten Solenoid (204, 1004) enthält;
Positionieren eines Magnetfeldsensors (252) in der Nähe des magnetoelastischen Elements (210), so dass der Magnetfeldsensor Magnetfelder messen kann, die von verschiedenen Abschnitten des magnetisch konditionierten Bereichs (242) erzeugt werden;
Drehen des magnetoelastischen Elements (210) um eine Achse;
Messen von Magnetfeldern, die von den verschiedenen Abschnitten des magnetisch konditionierten Bereichs (242) auf dem magnetoelastischen Element (210) erzeugt werden;
Berechnen eines oder mehrerer Anpassungsfaktoren basierend auf den gemessenen Magnetfeldern; und
Einstellen des Winkelversatzes zwischen der Gleichstrommagnetfeldquelle und dem magnetoelastischen Element (210) für die verschiedenen Abschnitte während des Drehens des magnetoelastischen Elements (210) auf der Grundlage der Einstellfaktoren.

13. Verfahren nach Anspruch 12, wobei die Schritte des Drehens des magnetoelastischen Elements (210), des Messens von Magnetfeldern, des Berechnens von Einstellfaktoren und des Einstellens der Gleichstrommagnetfeldquelle gleichzeitig ausgeführt werden.

14. Verfahren nach den Ansprüchen 1 oder 12, wobei das Einstellen den magnetisch konditionierten Bereich modifiziert, um ein Gleichstrommagnetfeld zu zeigen, das mit einem Drehwinkel variiert.

15. Verfahren nach Anspruch 14, wobei der modifizierte magnetisch konditionierte Bereich (242) ein Muster von Peaks umfasst, welche in Umfangsrichtung um das magnetoelastische Element (210) herum beabstandet sind.

16. Verfahren nach Anspruch 15, wobei das Muster im Wesentlichen sinusförmig ist.

17. Verfahren nach Anspruch 15, wobei die Peaks verschiedene Höhen aufweisen.

## Revendications

1. Procédé de fabrication d'un dispositif de détection de couple magnéto-élastique, le procédé comprenant les étapes consistant à :
positionner un solénoïde (204, 1004) formé autour d'un noyau magnétisé en permanence (1002) à proximité d'un élément magnéto-élastique ;
faire tourner l'élément magnéto-élastique (210) autour d'un axe central, une région initiale magnétiquement conditionnée (242) étant formée à un premier emplacement sur l'élément magnéto-élastique ;
mesurer des champs magnétiques produits par diverses parties de la région initiale magnétiquement conditionnée (242) ;
calculer un ou plusieurs facteurs d'ajustement sur la base des champs magnétiques mesurés ; et à
faire tourner l'élément magnéto-élastique (210) autour de l'axe central tout en appliquant un courant électrique au solénoïde (204, 1004), une région finale magnétiquement conditionnée étant formée au premier emplacement sur l'élément magnéto-élastique, le courant électrique appliqué étant ajusté sur la base des facteurs d'ajustement pendant la rotation de l'élément magnéto-élastique (210).

2. Procédé selon la revendication 1, comprenant en outre l'étape consistant à écarter la région initiale magnétiquement conditionnée (242) de l'élément magnéto-élastique (210).

3. Procédé selon la revendication 2, dans lequel l'étape consistant à écarter la région initiale magnétiquement conditionnée (242) de l'élément magnéto-élastique (210) comprend au moins le positionnement d'une source de champ magnétique à courant alternatif à proximité de l'élément magnéto-élastique et la rotation de l'élément magnéto-élastique autour de l'axe central.

4. Procédé selon la revendication 1, dans lequel l'étape consistant à mesurer des champs magnétiques consiste au moins à a) placer l'élément magnéto-élastique (210) à l'état de repos ; b) obtenir une mesure de champ magnétique correspondant à une position angulaire de l'élément magnéto-élastique ; c) faire tourner l'élément magnéto-élastique autour d'un axe central selon une valeur angulaire ; et d) répéter les étapes a) à c), jusqu'à ce que l'élément magnéto-élastique ait subi une rotation complète de 360 degrés.

5. Procédé selon la revendication 1, comprenant en outre l'étape consistant à créer d'une carte de données comprenant, pour chacune des différentes parties de la région initiale magnétiquement conditionnée (242), l'obtention d'une mesure de champ magnétique et d'une mesure de position angulaire correspondante.

6. Dispositif de détection de couple magnéto-élastique fabriqué par le procédé selon la revendication 1.

7. Dispositif de détection de couple magnéto-élastique selon la revendication 6, dans lequel l'élément magnéto-élastique (210) comprend un élément en forme de disque.

8. Dispositif de détection de couple magnéto-élastique selon la revendication 6, dans lequel l'élément magnéto-élastique comprend un arbre.

9. Système de fabrication d'un dispositif de détection de couple magnéto-élastique, le système comprenant :
un noyau magnétisé en permanence (1002), configuré pour être positionné à proximité d'un élément magnéto-élastique (210) ;
un solénoïde (204, 1004) comprenant une bobine formée autour du noyau magnétisé en permanence (1002) ;
un capteur de champ magnétique (252) configuré pour détecter un champ magnétique produit par l'élément magnéto-élastique (210) ;
un capteur de position permettant de détecter une position angulaire de l'élément magnéto-élastique (210) pendant sa rotation autour d'un axe central ; et
un ordinateur permettant de commander un courant électrique appliqué au solénoïde (204, 1004) sur la base de la position angulaire détectée et d'un facteur d'ajustement calculé, le facteur d'ajustement étant calculé sur la base du champ magnétique détecté pour cette position angulaire.

10. Système selon la revendication 9, dans lequel l'ordinateur est conçu pour recevoir des signaux électriques émis par le capteur de champ magnétique (252).

11. Système selon la revendication 10, dans lequel l'ordinateur comprend un logiciel conçu pour calculer des facteurs d'ajustement sur la base des signaux électriques émis par le capteur de champ magnétique (252), et commander le courant électrique appliqué au solénoïde sur la base des facteurs d'ajustement.

12. Procédé de fabrication d'un dispositif de détection de couple magnéto-élastique, le procédé comprenant les étapes consistant à :
positionner une source de champ magnétique à courant continu à proximité d'un élément magnéto-élastique (210), de sorte que la source de champ magnétique à courant continu puisse former une région magnétiquement conditionnée (242) sur l'élément magnéto-élastique, la source de champ magnétique à courant continu comprenant un noyau magnétisé en permanence comportant un solénoïde (204, 1004) disposé autour de celui-ci ;
positionner un capteur de champ magnétique (252) à proximité de l'élément magnéto-élastique (210), de sorte que le capteur de champ magnétique soit capable de mesurer des champs magnétiques produits par diverses parties de la région magnétiquement conditionnée (242) ;
faire tourner l'élément magnéto-élastique (210) autour d'un axe ;
mesurer des champs magnétiques produits par les diverses parties de la région magnétiquement conditionnée (242) sur l'élément magnéto-élastique (210) ;
calculer un ou plusieurs facteurs d'ajustement sur la base des champs magnétiques mesurés ; et
ajuster le décalage angulaire entre la source de champ magnétique à courant continu et l'élément magnéto-élastique (210) pour les diverses parties pendant la rotation de l'élément magnéto-élastique (210) sur la base des facteurs d'ajustement.

13. Procédé selon la revendication 12, dans lequel les étapes consistant à faire tourner l'élément magnéto-élastique (210), à mesurer des champs magnétiques, à calculer des facteurs d'ajustement et à ajuster la source de champ magnétique à courant continu sont réalisées simultanément.

14. Procédé selon les revendications 1 ou 12, dans lequel l'ajustement modifie la région magnétiquement conditionnée afin qu'elle présente un champ magnétique à courant continu qui varie selon l'angle de rotation.

15. Procédé selon la revendication 14, dans lequel la région magnétiquement conditionnée (242) modifiée comprend un motif de pics espacés de manière circonférentielle autour de l'élément magnéto-élastique (210).

16. Procédé selon la revendication 15, dans lequel le motif est sensiblement sinusoïdal.

17. Procédé selon la revendication 15, dans lequel les pics sont de hauteurs diverses.
